**Europäisches Patentamt**

**European Patent Office**

**Office européen des brevets**

(19)

(11) Publication number : **0 107 888 B2**

# (12) NEW EUROPEAN PATENT SPECIFICATION

(45) Date of publication of the new patent specification : **06.04.94 Bulletin 94/14**

(51) Int. Cl.$^5$ : **C08G 63/20,** C09D 5/46, C09D 167/02

(21) Application number : **83201538.2**

(22) Date of filing : **26.10.83**

(54) **Polyester and its use in powder coating.**

The file contains technical information submitted after the application was filed and not included in this specification

(30) Priority : **29.10.82 NL 8204205**

(43) Date of publication of application : **09.05.84 Bulletin 84/19**

(45) Publication of the grant of the patent : **25.06.86 Bulletin 86/26**

(45) Mention of the opposition decision : **06.04.94 Bulletin 94/14**

(84) Designated Contracting States : **AT BE CH DE FR GB IT LI LU NL SE**

(56) References cited :
EP-A- 0 008 262
EP-A- 0 024 680
NL-A- 7 117 721
NL-A- 7 705 326
NL-A- 7 710 524
US-A- 4 112 012
CHEMICAL ABSTRACTS, vol. 87, no. 26, 26th December 1977, page 72, no. 203175e, Columbus, Ohio, USA

(56) References cited :
CHEMICAL ABSTRACTS, vol. 81, no. 22, 2nd December 1974, page 83, no. 137696y, Columbus, Ohio, USA
CHEMICAL ABSTRACTS, vol. 90, no. 4, 22nd January 1979, page 83, no. 24883z, Columbus, Ohio, USA
Alkyd Resin Technology Interscience Publ. New York-London 1962, p. 106f.
Amoco Chemical Corp. Bulletin IP-65, 1978, p. 13, How to process better coating resins with Amoco IPA and TMA
URALAC P3400, Product information from SCADO GmbH, June 1979

(73) Proprietor : **DSM RESINS BV**
**Ceintuurbaan 5**
**NL-8022 AW Zwolle (NL)**

(72) Inventor : **Belder, Eimbert Gerrit**
**Anjerweg 16**
**NL-8042 CS Zwolle (NL)**
Inventor : **van der Linde, Robert**
**Kuyerhuislaan 10**
**NL-8024 PD Zwolle (NL)**
Inventor : **Schippers, Jan**
**Vordensebeek 12**
**NL-8033 DE Zwolle (NL)**

(74) Representative : **Hoogstraten, Willem Cornelis Roeland et al**
**OCTROOIBUREAU DSM Postbus 9**
**NL-6160 MA Geleen (NL)**

EP 0 107 888 B2

## Description

The application relates to a powder coating of which the binding agent contains a homogeneous mixture of triglycidyl isocyanurate and a polyester containing carboxyl groups, which polyester is based on a substantially aromatic dicarboxylic acid mixture and on a substantially aliphatic diol mixture.

Polyesters containing carboxyl groups for use in powder paints are already known from the prior art and in practice these are processed to binding agents for powder coatings in a combination of at least 7 % by weight triglycidyl isocyanurate (TGIC) and consequently at most 93 % by weight polyester. Compare Dutch Patent Specification No 159,129, as well as NL-A-7604421 and EP-A-0,024,680.

In use, these known binding agents for powder coating present one or several of the following problems:

1. The relatively high TGIC content requires the use of a polyester having a relatively high glass transition temperature, as a result of which limitations in the freedom of formulation of the polyester arise.

2. The flow of the polyester-epoxy combination is not optimal ('orange-peel effect').

3. The physical and sometimes also the chemical powder stability is not all that is to be desired, particularly with polyesters having a glass transition temperature below 55 ⊏C.

4. The cured coating layer is sometimes not completely water-clear.

The present invention now provides powder coatings based on binding agents which are improved with respect to one or several of the aforementioned problems. The powder coating according to the invention is characterized in that the mixture contains between 1.4 and 5.3 % by weight triglycidyl isocyanurate and from 94.7 to 98.6 % by weight of a polyester containing carboxyl groups with the following combination of properties: an acid number between 12 and 24 mg KOH/g, a hydroxyl number that is smaller than 15 mg KOH/g, a theoretical number-average molecular weight between 4,500 and 12,500, a glass transition temperature between 40°C and 85°C and a viscosity of 430-1300 dPas at 165°C.

According to a preferred method of the invention the weight percentage of the triglycidylisocyanurate is between 1.6 and 4.9 % by weight and the weight percentage of the polyester is between 95.1 and 98.4 % by weight.

Conspicuous therein is especially the relatively high molecular weight of the polyester, and it is quite surprising that in spite of this higher molecular weight an excellent flow of the powder coating is obtained. Moreover, because of the relatively high molecular weight, the polyester resin contains relatively little low molecular material, as a result of which a better powder stability arises. The low lower limit of the glass transition temperature range is also conspicuous. The greater clearness in combination with the excellent flow of the coating which the polyester/epoxy binding agent systems according to the invention yield makes these systems particularly suitable as top-coating for automobiles.

The theoretical number-average molecular weight of the polyester is preferably 5,500-10,500, and the glass transition temperature is preferably between 50 and 70°C. The average carboxyl functionality of the polyester is in the range of 2 to 3, preferably between 2.2 and 2.8, more particularly between 2.2 and 2.5.

The polyesters containing carboxyl groups, which are provided according to the invention, may be prepared, in manners which are known per se, substantially from aromatic polycarboxylic acids, such as phthalic acid, isophthalic acid, terephthalic acid, benzene-1,2,4-tricarboxylic acid, pyromellitic acid, trimesic acid, 3,6-dichlorophthalic acid, tetrachlorophthalic acid, or from the anhydrides, acid chlorides or lower alkyl esters thereof, in as far as these are obtainable. Preferably the carboxylic acid component consists to at least 50, preferably at least 70 mol.% of aromatic dicarboxylic acids, particularly isophthalic acid and/or terephthalic acid. Also used are especially aliphatic diols, such as ethylene glycol, propane-1,2-diol, propane-1,3-diol, butane-1,2-diol, butane-1,4,-diol, 2,2-dimethylpropanediol-1,3 (neopentyl glycol), hexane-2,5-diol, hexane-1,6-diol, 2,2-[bis-4(hydroxycylclohexyl)]-propane, 1,4-dimethylolcyclohexane, diethylene glycol, dipropylene glycol and 2,2-bis-[4-(2-hydroxyethoxy)phenyl]-propane, and smaller amounts of polyols, such as glycerol, hexanetriol, pentaerythritol, sorbitol, trimethylolethane, trimethylolpropane and tris-(2-hydroxyethyl)isocyanurate. Also, instead of diols or polyols, epoxy compounds may be used. Preferably the alcohol component consists to at least 50 mol.% of neopentyl glycol and/or propylene glycol.

Beside these, cycloaliphatic and/or acyclic polycarboxylic acids may be used as polycarboxylic acids, for example tetrahydrophthalic acid, hexahydroendomethylenetetrahydrophthalic acid, azelaic acid, sebacic acid, decanedicarboxylic acid, dimeric fatty acid, adipic acid, succinic acid and maleic acid, in amounts of at most 30 mol.%, preferably to a maximum of 20 mol.% of the total amount of carboxylic acids. Also hydroxycarboxylic acids and/or optionally lactones may be used, e.g. 12-hydroxystearic acid, epsilon-caprolactone, hydroxypivalic acid ester of neopentyl glycol (esterdiol 204). Monocarboxylic acids, such as benzoic acid, tert.-butylbenzoic acid, hexahydrobenzoic acid and saturated aliphatic monocarboxylic acids may also be added in minor amounts during the preparation.

The polyesters are prepared, in manners known per se, by esterification or interesterification, whether or not in the presence of conventional catalysts, such as e.g. dibutyl-tin oxide or tetrabutyl titanate, whereby, through a suitable choice of heating conditions and of the COOH/OH ratio, end products are obtained of which the acid number lies between 12 and 24 mg KOH/g. These polyesters have practically no more free hydroxyl groups, i.e. the hydroxyl number is smaller than 15 and preferably even smaller than 5 mg KOH/g. For optimal adjustment of the glass transition temperature and the viscosity, it is desirable to use up to 15 mol.% of a compound having 4 or more methylene groups optionally substituted with lower alkyl groups (methyl or ethyl), e.g. adipic acid, pentanediol-1,5 or dipropylene glycol.

As cross-linking agent triglycidyl isocyanurate is used. Preferably use is made of TGIC having an epoxy content of at least 9.3 equivalents per kg.

The amount of triglycidyl isocyanurate that is used in combination with the polyester is dependent on the acid number of the polyester and lies between 0.8 and 1.2, preferably between 0.9 and 1.1 equivalent epoxy per equivalent carboxyl. This means that between 1.4 and 5.3 % by weight, preferably between 1.6 and 4.9 % by weight TGIC and consequently 94.7 to 98.6 % by weight preferably 95.1 to 98.4 % by weigth polyester are used. It is quite surprising that, with the use of these small amounts of TGIC, nevertheless well-cured coating layers are obtained.

The polyester and the TGIC are homogeneously mixed, preferably in the melt, by means of an extruder. As a rule, the usual additives are added before the mixing. This concerns especially flowing aids, curing catalysts and optionally pigments and/or fillers. The mixture thus obtained is subsequently ground and sieved, and this powder paint is then applied by means of an electrostatic spraying apparatus and thereafter cured in a stoving oven for 10 to 30 minutes at temperatures of between 160 and 200°C. The coating layer thus obtained exhibits an excellent combination of gloss, flow, clearness and mechanical properties, with the powder paint having a very good powder stability both in chemical and physical respect.

The invention will be further illustrated by the following examples:

## A. Preparation of the polyester resin

### Example 1A

A three litre reaction vessel, equipped with a thermometer, a stirrer and a distillation apparatus, was filled with the following materials: 17 g trimethylolpropane, 1,475 g terephthalic acid, 1,055 g neopentyl glycol, 58 g 1,4-cyclohexanedimethylol, 71 g hexane-diol-1,6 and 29 g adipic acid.

Thereafter, with stirring, while a light stream of nitrogen was led over the reaction mixture, the temperature was increased to 200°C, at which water formed; the temperature was gradually increased further to a maximum of 250°C and the water was distilled off. After 453 ml water had been collected the acid number of the ester was 13.7 mg KOH/g.

Subsequently, 355 g of isophthalic acid was added and further esterified to acid number 19.8 mg KOH/ g. The last part of this process was carried out under reduced pressure. The theoretical number-average molecular weight (Mn) of the acidic polyester was 6,500, the glass transition temperature 58°C, the hydroxyl number was smaller than 5 mg KOH/g and the viscosity was 700 dPa.s at 165°C.

### Examples 2A-10A

Following the procedure described in Example 1A, polyester resins according to the invention were prepared of which the charge composition, acid number, OH number, viscosity at 165°C, glass transition temperature and theoretical number-average molecular weight are given in Table 1.

## B. Preparation of the powder coating

### Example 1B

576 g of the granulated polyester resin of Example 1A was dry-mixed with 24 g triglycidyl isocyanurate, 300 g titanium dioxide (CL 310 from the company "Kronos"), 9 g Resiflow∗ PV-5 (a polyacrylate 66% active, remainder probably silica from the company "Worlée") and 4.5 g benzoin, and subsequently introduced into an extruder (type PR 46 from the company "Buss"). The extrudate was cooled, ground and sieved, the sieve fraction, smaller than 90 micrometer, being collected and used as powder coating. This powder coating was electrostatically sprayed onto steel panels which had been degreased beforehand with trichloroethane. For this, an electrostatic spraying apparatus, type HP 720 from the company "Gema", was employed. Thereafter the panels were judged on the following properties:

Gloss (Gardner 60°): 92
Mechanical properties:
(Reverse Impact): greater than 11 kg/cm$^2$ (= greater than 160 psi)
Flow of the coating layer (visual): 10
Powder stability (28 days at 40°C): good.

Examples 2B-10B

In the same manner as in Example 1B, powder coatings were prepared starting from the polyester resins according to Examples 2A-10A. The compositions and the test results of these powder coatings are given in Table 2.

Example 11B

Starting from polyester resin 7A, a clear (non-pigmented) powder coating was prepared following the same procedure as described in Example 1B, with the exception of the fact that 4.8 g silicon surfactant SR 232 (from "British Petroleum") was used as the flowing aid instead of Resiflow* PV-5. The panels sprayed with this exhibited properties similar to those of Example 7B, while the coating layer had excellent clearness.

*Resiflow is a trade mark

TABLE 1

Composition and properties of the polyesters

| Composition (g) | 2A | 3A | 4A | 5A | 6A | 7A | 8A | 9A | 10A |
|---|---|---|---|---|---|---|---|---|---|
| terephthalic acid | 1669 | 1727 | 1499 | 1709 | 1530 | 1518 | 1550 | 1445 | 1605 |
| neopentyl glycol | 1030 | 1004 | 1040 | 1065 | 1029 | 1002 | 1017 | 1013 | 1079 |
| adipic acid | | | | | | | | 29 | 83 |
| hexanediol-1,6 | 71 | | | | 110 | 121 | | 93 | 84 |
| pentanediol-1,5 | | | 63 | 84 | | | | | |
| diethylene glycol | | | | | | | 110 | | |
| isophthalic acid | 155 | 154 | 372 | 171 | 325 | 341 | 314 | 348 | 113 |
| 1,4-cyclohexanedimethylol | 58 | | 58 | | 54 | 54 | 50 | 57 | |
| ethylene glycol | | 99 | | | | | | | |
| trimethylolpropane | 17 | 17 | 30 | 30 | 12 | 25 | 19 | 17 | 16 |
| 12-hydroxystearic acid | 60 | 59 | | | | | | | 21 |
| Properties | | | | | | | | | |
| acid no. (mg KOH/g) | 19.8 | 18.0 | 20.2 | 20.5 | 16.4 | 20.8 | 19.8 | 19.6 | 16.5 |
| $\bar{M}n$ | 6500 | 6500 | 6500 | 6500 | 7000 | 7000 | 7500 | 6500 | 9000 |
| Hydroxyl no. (mg KOH/g) | < 5 | < 5 | < 5 | < 5 | < 5 | < 5 | < 5 | < 5 | < 5 |
| Viscosity at 165°C (dPa.s) | 430 | 720 | 1100 | 1300 | 650 | 1100 | 970 | 610 | 510 |
| Glass transition temperature (°C) | 52 | 56.5 | 57.5 | 58 | 59.5 | 58.5 | 56 | 54 | 48.5 |
| Average carboxyl functionality | 2.3 | 2.3 | 2.5 | 2.5 | 2.2 | 2.5 | 2.4 | 2.3 | 2.4 |

EP 0 107 888 B2

TABLE 2

Composition and properties of the powder coatings

| Composition (g) | 2B | 3B | 4B | 5B | 6B | 7B | 8B | 9B | 10B |
|---|---|---|---|---|---|---|---|---|---|
| Polyester resin | 576 | 576 | 576 | 576 | 582 | 576 | 576 | 576 | 583 |
| TGIC * | 24 | 24 | 24 | 24 | 18 | 24 | 24 | 24 | 17 |
| Pigment (TiO$_2$) | 300 | 300 | 300 | 300 | 300 | 300 | 300 | 300 | 300 |
| Resiflow °PV-5 | 9 | 9 | 9 | 9 | 9 | 9 | 9 | 9 | 9 |
| Benzoin | 4.5 | 4.5 | 4.5 | 4.5 | 4.5 | 4.5 | 4.5 | 4.5 | 4.5 |
| **Properties** | | | | | | | | | |
| Gloss (Gardner 60°) | 92 | 90 | 91 | 93 | 90 | 95 | 88 | 91 | 92 |
| Mech. prop.** (kg/cm$^2$) | 11 | 11 | 8 | 9 | 11 | 11 | 11 | 11 | 11 |
| (psi) | 160 | 160 | 120 | 130 | 160 | 160 | 160 | 160 | 160 |
| Flow*** | 10 | 9 | 8 | 8 | 9 | 10 | 10 | 10 | 10 |
| Powder stability (28 days, 40°C) | good | good | good | good | good | good | good | good | good |

*) triglycidyl isocyanurate

**) determined according to ASTM D 2794—69

***) judged visually on a scale of 1—10, in which 1 = very bad, 10 = excellent.

° Resiflow is a trade mark.

## Claims

1. A powder coating, of which the binding agent contains a homogeneous mixture of triglycidyl isocyanurate and a polyester containing carboxyl groups, which polyester is based on a substantially aromatic dicarboxylic acid mixture and on a substantially aliphatic diol mixture, characterized in that the homogeneous mixture contains between 1.4 and 5.3 % by weight triglycidyl isocyanurate and from 94.7 to 98.6 % by weight of a polyester containing carboxyl groups with the following combination of properties: an acid number between 12 and 24 mg KOH/g, a hydroxyl number that is smaller than 15 mg KOH/g, a theoretical number-average molecular weight between 4,500 and 12,500, a glass transition temperature between 40°C and 85°C and a viscosity of 430-1300 dPas at 165°C.

2. A powder coating according to claim 1, characterized in that the polyester has a theoretical number-average molecular weight of 5,500-10,500.

3. A powder coating according to any one of claims 1-2, characterized in that the glass transition temperature of the polyester is between 50-70°C.

4. A powder coating according to any one of claims 1-3, characterized in that the average carboxyl functionality is between 2.2-2.8.

5. A powder coating according to any one of claims 1-4, characterized in that the polyester contains a compound which has at least 4 optionally substituted methylene groups in an amount of at most 15 mol%.

6. A powder coating according to any one of claims 1-5, characterized in that the weight percentage of the triglycidyl isocyanurate is between 1.6 and 4.9 % by weigth.

7. A process for the electrostatic coating of a substrate with a powder coating and curing of the powder coating, characterized in that a powder coating according to any one of claims 1-6 is used.

8. A completely or partly coated substrate, characterized in that a powder coating according to any one of claims 1-6 is used as coating material.

**Patentansprüche**

1. Pulverbeschichtung, worin das Bindemittel eine homogene Mischung von Triglycidylisocyanurat und einem Carboxylgruppen enthaltenden Polyester enthält, welcher Polyester auf einer im wesentlichen aromatischen Dicarbonsäure-Mischung und einer im wesentlichen aliphatischen Diol-Mischung basiert, dadurch gekennzeichnet, daß die homogene Mischung zwischen 1,4 und 5,3 Masse-% Triglycidylisocyanurat und 94,7 bis 98,6 Masse-% eines Carboxylgruppen enthaltenden Polyesters mit der folgenden Kombination an Eigenschaften enthält: Säurezahl zwischen 12 und 24 mg KOH/g, Hydroxylzahl von weniger als 15 mg KOH/g, theoretisches Zahlenmittel der Molmasse zwischen 4 500 und 12 500, Glasübergangstemperatur zwischen 40 und 85°C und Viskosität von 430 bis 1300 dPa.s bei 165°C.

2. Pulverbeschichtung nach Anspruch 1, dadurch gekennzeichnet, daß der Polyester ein theoretisches Zahlenmittel der Molmasse von 5 500 bis 10 500 aufweist.

3. Pulverbeschichtung nach Anspruch 1 oder 2, dadurch gekennzeichnet, daß die Glasübergangstemperatur des Polyesters zwischen 50 und 70°C liegt.

4. Pulverbeschichtung nach einem der Ansprüche 1 bis 3, dadurch gekennzeichnet, daß die mittlere Carboxyl-Funktionalität zwischen 2,2 und 2,8 liegt.

5. Pulverbeschichtung nach einem der Ansprüche 1 bis 4, dadurch gekennzeichnet, daß der Polyester eine Verbindung, die zumindest 4 gegebenenfalls substitutierte Methylengruppen in einer Menge von höchstens 15 Mol-% aufweist, enthält.

6. Pulverbeschichtung nach einem der Ansprüche 1 bis 5, dadurch gekennzeichnet, daß der Masseprozentsatz des Triglycidylisocyanurats zwischen 1,6 und 4,9 Masse-% liegt.

7. Verfahren zur elektrostatischen Beschichtung eines Substrats mit einer Pulverbeschichtung und Aushärtung der Pulverbeschichtung, dadurch gekennzeichnet, daß eine Pulverbeschichtung nach einem der Ansprüche 1 bis 6 verwendet wird.

8. Vollständig oder teilweise beschichtetes Substrat, dadurch gekennzeichnet, daß als Beschichtungsmaterial eine Pulverbeschichtung nach einem der Ansprüche 1 bis 6 verwendet wird.

## Revendications

1. Revêtement en poudre dont l'agent liant contient un mélange homogène d'isocyanurate de triglycidyle et un polyester contenant des groupes carboxyle, polyester qui est à base d'un mélange d'acides dicarboxyliques sensiblement aromatiques et d'un mélange de diols sensiblement aliphatiques, caractérisé en ce que le mélange homogène contient de 1,4 à 5,3% en poids d'isocyanurate de triglycidyle et de 94,7 à 98,6% en poids d'un polyester contenant des groupes carboxyle, avec la combinaison suivante de propriétés :
un indice d'acide de 12 à 24 mg KOH/g, un indice d'hydroxyle inférieur à 15 mg KOH/g, une masse moléculaire moyenne théorique en nombre de 4500 à 12500, une température de transition vitreuse de 40 à 85°C et une viscosité de 430 à 1300 dPas à 165°C.

2. Revêtement en poudre selon la revendication 1, caractérisé en ce que le polyester présente une masse moléculaire moyenne théorique en nombre de 5500 à 10500.

3. Revêtement en poudre selon la revendication 1 ou 2, caractérisé en ce que la température de transition vitreuse du polyester est de 50 à 70°C.

4. Revêtement en poudre selon l'une quelconque des revendications 1 à 3, caractérisé en ce que la fonctionnalité carboxylique moyenne est de 2,2 à 2,8.

5. Revêtement en poudre selon l'une quelconque des revendications 1 à 4, caractérisé en ce que le polyester contient un composé comportant au moins 4 groupes méthylène facultativement substitués en une proportion jusqu'à 15 moles%.

6. Revêtement en poudre selon l'une quelconque des revendications 1 à 5, caractérisé en ce que le pourcentage en poids de l'isocyanurate de triglycidyle est compris entre 1,6 et 4,9%.

7. Procédé de revêtement électrostatique d'un substrat avec un revêtement en poudre et durcissement du revêtement en poudre, caractérisé en ce qu'on utilise un revêtement en poudre selon l'une quelconque des revendications 1 à 6.

8. Substrat entièrement ou partiellement revêtu, caractérisé en ce qu'on utilise comme matière de revêtement un revêtement en poudre selon l'une quelconque des revendications 1 à 6.